(19) Europäisches Patentamt
European Patent Office
Office européen des brevets

(11) **EP 3 760 573 B1**

(12) **EUROPÄISCHE PATENTSCHRIFT**

(45) Veröffentlichungstag und Bekanntmachung des Hinweises auf die Patenterteilung:
**11.05.2022 Patentblatt 2022/19**

(21) Anmeldenummer: **20177061.7**

(22) Anmeldetag: **28.05.2020**

(51) Internationale Patentklassifikation (IPC):
*B66F 9/10* ^(2006.01)        *B66F 9/075* ^(2006.01)
*B66F 17/00* ^(2006.01)       *G01L 5/00* ^(2006.01)
*G01L 1/22* ^(2006.01)

(52) Gemeinsame Patentklassifikation (CPC):
**B66F 9/10; B66F 9/07586; B66F 17/003;**
**G01L 1/2218; G01L 1/2243; G01L 5/0004**

(54) **SCHUBMASTSTAPLER**

REACH TRUCK

CHARIOT ÉLÉVATEUR À FOURCHE RÉTRACTABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.07.2019 DE 102019118129**

(43) Veröffentlichungstag der Anmeldung:
**06.01.2021 Patentblatt 2021/01**

(73) Patentinhaber: **Linde Material Handling GmbH**
**63743 Aschaffenburg (DE)**

(72) Erfinder:
- **HANKE, Mark**
  **63739 Aschaffenburg (DE)**
- **HANKE, Björn**
  **64385 Reichelsheim (DE)**

(74) Vertreter: **Patentship Patentanwaltgesellschaft**
**Schertlinstraße 29**
**86159 Augsburg (DE)**

(56) Entgegenhaltungen:
**EP-A1- 3 398 904          DE-A1- 19 828 938**
**DE-A1-102013 114 940    DE-A1-102017 127 258**
**JP-A- 2011 148 560**

**Beschreibung**

Die Erfindung betrifft einen Schubmaststapler mit einem ein Lastaufnahmemittel aufweisenden Hubgerüst, wobei das Hubgerüst an einem Schubschlitten angeordnet ist und der Schubschlitten in Fahrzeuglängsrichtung verschiebbar an einem Fahrzeugkörper des Schubmaststaplers angeordnet ist, wobei an dem Schubschlitten zwei in Fahrzeugquerrichtung beabstandete vordere Laufrollen und zwei in Fahrzeugquerrichtung beabstandete hintere Laufrollen angeordnet sind, mit denen der Schubschlitten am Fahrzeugkörper geführt ist, wobei die Laufrollen jeweils auf einem an dem Schubschlitten angeordneten Achsschenkel drehbar gelagert sind. Solch ein Schubmaststapler ist z.B. aus DE19828938A1 bekannt.

Bei Flurförderzeugen, beispielsweise Schubmaststaplern, ist bekannt, das Lastgewicht einer mit dem Lastaufnahmemittel aufgenommene Last zu erfassen. Eine häufig hierfür genutzte Möglichkeit ist die Erfassung der Hubkraft in einem Hubantrieb des Lastaufnahmemittels, beispielsweise bei einem Hubzylinder über die Erfassung des hydraulischen Drucks. Für die Stabilitätsberechnung des Flurförderzeugs ist jedoch auch entscheidend, wo sich der Schwerpunkt der aufgenommenen Last befindet, da vom horizontalen Abstand des Lastschwerpunkts der Last das durch die Last aufgebrachte Lastmoment abhängt.

Soweit ein Flurförderzeug mit einem neigbaren Hubgerüst ausgestattet ist, ist es denkbar, durch die zusätzliche Erfassung von Kräften oder des hydraulischen Druckes in den Neigezylindern des Hubgerüstes den Lastschwerpunkt einer aufgenommenen Last zu bestimmen, wenn das Lastgewicht bekannt ist. Die Ermittlung der Kräfte der Neigezylinder anhand des hydraulischen Druckes ist jedoch reibungs- und viskositätsabhängig und lässt daher nur eine begrenzte Genauigkeit bei der Berechnung des Lastschwerpunktes zu.

Bei einem nicht-neigbaren Hubgerüst, der in der Regel bei Schubmaststaplern zum Einsatz kommt, kann auf diesem Wege keine Aussage über den Lastschwerpunkt einer aufgenommenen Last getroffen werden.

Der vorliegenden Erfindung liegt die Aufgabe zugrunde, einen Schubmaststapler der eingangs genannten Gattung zur Verfügung zu stellen, der eine Bestimmung der Lage des Lastschwerpunktes ermöglicht.

Diese Aufgabe wird erfindungsgemäß dadurch gelöst, dass die Achsschenkel der vorderen Laufrollen und/oder die Achsschenkel der hinteren Laufrollen mit jeweils einer Sensorik zur Kraftmessung der auf die Laufrollen wirkenden Kräfte versehen sind. Mit der Sensorik in den Achsschenkeln der vorderen Laufrollen und/oder in den Achsschenkeln der hinteren Laufrollen können auf einfache Weise die auf die entsprechenden Laufrollen einwirkenden Kräfte ermittelt und gemessen werden. In Verbindung mit einem ebenfalls bekannten oder mittels einer entsprechenden Sensorvorrichtung gemessenen Lastgewicht einer mit dem Lastaufnahmemittel aufgenommenen Last kann mit den gemessenen Kräften auf die entsprechenden Laufrollen des Schubschlittens auf einfache Weise der horizontale Abstand des Lastschwerpunktes der Last in Fahrzeuglängsrichtung, beispielsweise von der Drehachse der vorderen Laufrollen des Schubschlittens berechnet werden. Da weiterhin an beiden in Fahrzeugquerrichtung voneinander beabstandeten vorderen Laufrollen und/oder an beiden in Fahrzeugquerrichtung voneinander beabstandeten hinteren Laufrollen des Schubschlittens die auf die entsprechenden Laufrollen des Schubschlittens einwirkenden Kräfte gemessen werden, kann weiterhin auf die seitliche Lage des Lastschwerpunkts der mit dem Lastaufnahmemittel aufgenommenen Last in Fahrzeugquerrichtung geschlossen und diese bestimmt werden. Für die Bestimmung der Lage des Lastschwerpunktes in Fahrzeuglängsrichtung und/oder in Fahrzeugquerrichtung sind somit nur die mit der entsprechenden Sensorik versehenen Achsschenkel für die vorderen und/oder hinteren Laufrollen des Schubschlittens und eine Sensorvorrichtung erforderlich, mit der das Lastgewicht einer mit dem Lastaufnahmemittel aufgenommenen Last gemessen wird.

Gemäß einer vorteilhaften Ausgestaltungsform der Erfindung weist der Achsschenkel jeweils einen Lagerungszapfen, an dem die Laufrolle drehbar gelagert ist, und einen Befestigungsflansch auf, mit dem der Achsschenkel an dem Schubschlitten befestigt ist, wobei die Sensorik in Längsrichtung des Achsschenkels zwischen dem Lagerungszapfen und dem Befestigungsflansch in einem Messabschnitt des Achsschenkels angeordnet ist. Bei einer Belastung der an dem Achsschenkel angeordnete Laufrolle stellt sich somit an dem Achsschenkel eine Biegebelastung ein, die mit der Sensorik in dem zwischen dem Befestigungsflansch und dem Lagerungszapfen angeordneten Messabschnitt auf einfache Weise erfasst werden kann.

Gemäß einer vorteilhaften Ausgestaltungsform der Erfindung ist der Achsschenkel zur Aufnahme der Sensorik jeweils mit mindestens einer Ausnehmung versehen. In einer entsprechenden Ausnehmung kann die Sensoreinrichtung der Sensorik geschützt im Achsschenkel der Laufrolle eingebaut werden.

Die Ausnehmung bzw. die Ausnehmungen ist bzw. sind vorteilhafterweise horizontal angeordnet und erstreckt sich jeweils in Fahrzeuglängsrichtung. Die auf die Laufrolle einwirkenden Kräfte führen an dem Achsschenkel zu Verformungen um eine horizontale, in Fahrzeuglängsrichtung verlaufende Achse. Sofern die Ausnehmung bzw. die Ausnehmungen ebenfalls horizontal angeordnet ist und in Fahrzeuglängsrichtung verläuft, führen die Kräfte auf die Laufrolle an den Wänden der Ausnehmungen zu entsprechenden Verformungen, die mit der Sensorik für die Ermittlung der auf die Laufrolle einwirkenden Kräfte genutzt und gemessen werden können.

Gemäß einer vorteilhaften Ausführungsform der Erfindung erfolgt mit der Sensorik jeweils eine Dehnungsmessung des Achsschenkels. Die Kraftmessung zur Ermittlung der Kräfte auf die entsprechende Laufrolle basiert somit auf dem Prinzip der Dehnungsmessung.

Die Sensoreinrichtung der Sensorik ist bevorzugt von Dehnmessstreifen (DMS) gebildet, mit denen die unter Belastung auftretenden Dehnungen und somit Verformungen des Achsschenkels erfasst werden. Dabei kann die Messung der Dehnung des Achsschenkels unter Schubbelastung durch Dehnungsmessstreifen oder alternativ die Messung der Dehnung des Achsschenkels unter Schubbelastung durch Dünnfilmzellen oder alternativ die Messung der Dehnung des Achsschenkels nach dem Prinzip Doppelbiegebalken unter Zug- und Druckbelastung oder alternativ die Messung der Dehnung des Achsschenkels über einen Einpresssensor erfolgen.

Gemäß einer vorteilhaften Weiterbildung der Erfindung führt die Sensorik eine redundante Kraftmessung durch. Die Kraftmessung ist somit an jedem Achsschenkel redundant ausgeführt. Die Redundanz kann beispielsweise dadurch erfolgen, dass die Sensorik zwei Sensoreinrichtungen aufweist und/oder die Sensorik bzw. jede Sensoreinrichtung jeweils eine DMS-Vollbrücke aufweist. Dadurch wird eine hohe Betriebssicherheit für die Ermittlung der auf die Laufrollen einwirkenden Kräfte erzielt.

Gemäß einer vorteilhaften Ausführungsform der Erfindung ist der Achsschenkel mittels des Befestigungsflansches an dem Schubschlitten lösbar befestigt, insbesondere mittels Schraubverbindungen. Die mit der mindestens einen Ausnehmung für die Sensorik versehenen Achsschenkel können hierdurch auf einfache Weise hergestellt werden und an dem Schubschlitten in der gewünschten Lage befestigt werden, um sicherzustellen, dass die Ausnehmung horizontal ausgerichtet ist und in Fahrzeuglängsrichtung verläuft.

Um sicherzustellen, dass sich der mit dem Befestigungsabschnitt an dem Schubschlitten befestigte Achsschenkel bei einer Belastung der Laufrolle entsprechend verformen kann, um mittels der Sensorik die entsprechenden auf die Laufrolle einwirkenden Kräfte ermitteln zu können, ist gemäß einer vorteilhaften Weiterbildung der Erfindung zwischen dem Achsschenkel und einer den Achsschenkel aufnehmenden Aufnahmebohrung des Schubschlittens im Bereich des Messabschnitts des Achsschenkels ein Luftspalt ausgebildet ist.

Besondere Vorteile ergeben sich, wenn der Achsschenkel mit einem von der Ausnehmung zu dem Befestigungsflansch, insbesondere zu einer Stirnseite des Befestigungsflansches, geführten Aufnahmekanal versehen ist, in dem ein mit der Sensorik in Verbindung stehendes Verbindungskabel angeordnet ist. Das mit der Sensorik verbundene Verbindungskabel kann somit in geschützter Weise im Innern des Achsschenkels zu dem Befestigungsflansch des Aschschenkels verlegt werden.

Gemäß einer vorteilhaften Weiterbildung der Erfindung ist in dem Aufnahmekanal eine Sensorelektronikeinrichtung angeordnet. Mit der Sensorelektronikeinrichtung kann eine entsprechende Signalaufbereitung der Signale der Sensorik und somit der Sensoreinrichtungen erzielt werden. Die Sensorelektronikeinrichtung kann hierbei bauraumsparend und geschützt in dem Aufnahmekanal, der in dem Achsschenkel ausgebildet ist, angeordnet werden.

Gemäß einer vorteilhaften Ausgestaltungsform der Erfindung ist der Achsschenkel zur Aufnahme der Sensorik mit einer den Achsschenkel durchsetzenden Ausnehmung versehen, wobei an einer oberen Begrenzungswand der Ausnehmung eine Sensoreinrichtung und/der an einer unteren Begrenzungswand der Ausnehmung eine Sensoreinrichtung als Sensorik angeordnet ist.

Gemäß einer alternativen und ebenfalls vorteilhaften Ausgestaltungsform der Erfindung ist der Achsschenkel zur Aufnahme der Sensorik mit zwei fluchtend zueinander angeordneten Ausnehmungen versehen, zwischen denen ein Wandabschnitt ausgebildet ist, wobei an einer ersten Stirnseite des Wandabschnitts eine Sensoreinrichtung und an einer zweiten Stirnseite des Wandabschnitts eine Sensoreinrichtung als Sensorik angeordnet ist.

Gemäß einer vorteilhaften Weiterbildung der Erfindung steht die Sensorik mit einer elektronischen Steuereinrichtung in Verbindung steht, die mit einer das Lastgewicht einer auf dem Lastaufnahmemittel befindlichen Last erfassenden Sensorvorrichtung in Verbindung steht, wobei die Steuereinrichtung derart ausgebildet ist, dass aus dem Lastgewicht der Last und der mittels der Sensorik erfassten Kräfte zusammen mit in der Steuereinrichtung hinterlegten Werten zur Geometrie des Schubschlittens der horizontale Abstand des Lastschwerpunkts der Last in Fahrzeuglängsrichtung und/oder das Lastmoment der Last und/oder die seitliche Lage des Lastschwerpunkts der Last in Fahrzeugquerrichtung bestimmt wird. Bei bekanntem Abstand der vorderen und hinteren Laufrollen des Schubschlittens und somit bekannten Werten zur Geometrie des Schubschlittens kann bei bekanntem, mittels der Sensorvorrichtung gemessenem Lastgewicht und mittels der von der Sensorik der Achsschenkel erfassten Kräften auf die vorderen und/oder die hinteren Laufrollen des Schubschlittens anhand eines Momentengleichgewichts um die Drehachse der vorderen Laufrollen der horizontale Abstand des Lastschwerpunkts der aufgenommenen Last von der Drehachse der vorderen Laufrollen in Fahrzeuglängsrichtung und/oder das Lastmoment der aufgenommenen Last und/oder die seitliche Lage des Lastschwerpunkts der Last in Fahrzeugquerrichtung in der elektronischen Steuereinrichtung bestimmt und berechnet werden. Die das Lastgewicht einer auf dem Lastaufnahmemittel befindlichen Last erfassende Sensorvorrichtung kann hierbei beispielsweise den hydraulischen Druck in einer Hubhydraulik des Lastaufnahmemittels erfassen. Alternativ kann das Lastgewicht einer auf dem Lastaufnahmemittel befindlichen Last direkt mit einer Kraftmesssensorik gemessen werden, die beispielsweise die Kraft an einer das Lastaufnahmemittel betätigenden Hubkette erfasst oder die direkt in das Lastaufnahmemittel integriert ist, beispielsweise Gabelzinken mit einer integrierten Kraftmesssensorik.

Sofern gemäß einer Weiterbildung der Erfindung die Steuereinrichtung mit einer die Position des Schubschlittens in Fahrzeuglängsrichtung erfassenden Sensorvorrichtung in Verbindung steht, kann von der Steuereinrichtung auf einfache Weise die Lage des Lastschwerpunktes der aufgenommen Last in Fahrzeuglängsrichtung sowie die Lage des Gesamtschwerpunktes des Schubmaststaplers ermittelt werden. Die Position des Schubschlittens in Fahrzeuglängsrichtung kann mit einem entsprechenden Sensor gemessen werden oder anhand der Ansteuersignale eines Schubantriebs, beispielsweise eine elektrischen Schubantriebs, des Schubschlittens ermittelt werden.

Die Lage des Lastschwerpunktes in Fahrzeuglängsrichtung und die Lage des Lastschwerpunktes in Fahrzeugquerrichtung und/oder das Lastmoment kann für Assistenz- und/oder Sicherheitssysteme des Flurförderzeugs verwendet werden, um die Lage des Gesamtschwerpunktes des Flurförderzeugs ermitteln zu können. Bei Überschreiten vorgegebener kritischer Ergebnisse kann von den Assistenz- und/oder Sicherheitssystemen eine Warnmeldung ausgegeben und/oder in die Fahrzeugsteuerung eingegriffen wird. Auf diese Weise kann der Fahrer des Schubmaststaplers bei kritischen Lastbedingungen informiert und/oder unterstützt werden. Beispielsweise kann gewarnt werden, wenn die Last bei einem bestimmten Lastgewicht zu weit vorne am Lastaufnahmemittel positioniert ist, so dass die Gefahr eines Kippens des Schubmaststaplers nach vorne besteht, oder wenn sich der Lastschwerpunkt der Last so weit seitlich in Fahrzeugquerrichtung befindet, dass die Gefahr eines seitlichen Kippens des Schubmaststaplers besteht. Es kann auch automatisch in die Fahrzeugsteuerung eingegriffen werden, um z.B. den Schubmaststapler bei solchen kritischen Situationen zu stoppen oder die Fahrgeschwindigkeit entsprechend anzupassen. Auch ein automatisches Zurückfahren des Schubschlittens oder eine automatische Begrenzung der Hubhöhe kann in solchen Situationen erfolgen. Somit können Unfälle und Transportschäden vermieden werden.

Die Erfindung weist eine Reihe von Vorteilen auf.

Die Achsschenkel mit der integrierten Sensorik zur Erfassung der auf die vorderen und/oder hinteren Laufrollen des Schubschlittens einwirkenden Kräfte ermöglichen es auf einfache Weise, bei einem Schubmaststapler, der weiterhin mit einer Sensorvorrichtung zur Erfassung des Lastgewichts einer mit dem Lastaufnahmemittel aufgenommene Last versehen ist, die Position bzw. Lage des Lastschwerpunktes der aufgenommen Last in Fahrzeuglängsrichtung und in Fahrzeugquerrichtung zu bestimmen sowie das Lastmoment in Fahrzeuglängsrichtung und in Fahrzeugquerrichtung zu ermitteln.

Weitere Vorteile und Einzelheiten der Erfindung werden anhand der in den schematischen Figuren dargestellten Ausführungsbeispiele näher erläutert. Hierbei zeigt

Figur 1    einen erfindungsgemäßen Schubmaststapler in einer Seitenansicht,

Figur 2    einen Ausschnitt des Schubschlittens der Figur 1 in einer perspektivischen Darstellung,

Figur 3    eine weitere perspektivische Darstellung der Figur 2,

Figur 4    eine perspektivische Darstellung eines Schubschlittens mit Achsschenkel bei entfernter Laufrolle,

Figur 5    eine erste Ausführungsform eines Achsschenkel der Laufrolle,

Figur 6    einen Längsschnitt des Achsschenkels der Figur 5,

Figur 7    eine zweite Ausführungsform eines Achsschenkels der Laufrolle und

Figur 8    eine Skizze mit den auftretenden Kräften.

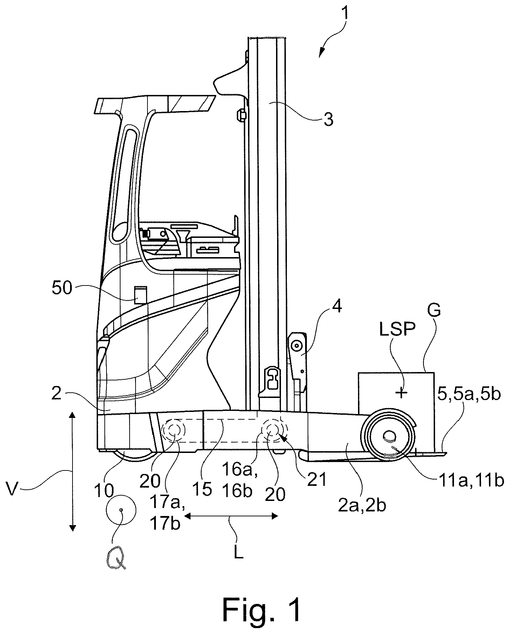

In der Figur 1 ist in ein erfindungsgemäßer Schubmaststapler 1 in einer Seitenansicht dargestellt.

Der Schubmaststapler 1 umfasst einen Fahrzeugkörper 2, an dem ein Hubgerüst 3 in Fahrzeuglängsrichtung L mittels eines nicht näher dargestellten Schubantriebs längsverschiebbar angeordnet ist.

An dem Hubgerüst 3 ist mittels einer nicht näher dargestellten Hubhydraulik ein Gabelträger 4 in vertikaler Richtung V anhebbar und absenkbar angeordnet. Das Hubgerüst 3 ist an dem Flurförderzeug 1 nicht-neigbar angeordnet.

An dem Gabelträger 4 ist ein Lastaufnahmemittel 5 zur Aufnahme einer Last G angeordnet. Das Lastaufnahmemittel 5 ist beispielsweise von zwei in Fahrzeugquerrichtung Q voneinander beabstandet angeordneten Gabelzinken 5a, 5b gebildet, die an dem Gabelträger 4 angeordnet sind.

Der Fahrzeugkörper 2 stützt sich mit einem lenkbaren Antriebsrad 10, das bevorzugt in Fahrzeugquerrichtung Q mittig angeordnet ist, und zwei Laufrädern 11a, 11b, die in Fahrzeugquerrichtung Q voneinander beabstandet sind, auf einer Fahrbahn ab. Die Laufräder 11a, 11b sind an den vorderen Enden von Radarmen 2a, 2b des Fahrzeugkörpers 2 angeordnet.

Das Hubgerüst 3 ist an einem Schubschlitten 15 angeordnet, der in Fahrzeuglängsrichtung L verschiebbar an dem Fahrzeugkörper 2 des Schubmaststaplers 1 angeordnet ist. An dem Schubschlitten 15 sind hierzu zwei in Fahrzeugquerrichtung Q voneinander beabstandete vordere Laufrollen 16a, 16b und zwei in Fahrzeugquerrichtung Q voneinander beabstandete hintere Laufrollen 17a, 17b angeordnet, mit denen der Schubschlitten 15 am Fahrzeugkörper 2 geführt und in Fahrzeuglängsrichtung L verfahrbar ist. Die Radarme 2a, 2b können hierzu jeweils mit entsprechenden oberen und unteren Laufbahnen versehen sein, zwischen den Laufrollen 16a, 16b, 17a, 17b angeordnet sind und an denen sich die Laufrollen 16a, 16b, 17a, 17b abstützen.

In der Seitenansicht der Figur 1 ist das Laufrad 11b an dem Radarm 2b und sind die Laufrollen 16b, 17b des Schubschlittens 15 dargestellt. Das Laufrad 11a an dem Radarm 2a und die Laufrollen 16a, 17a des Schubschlittens 15 sind an der gegenüberliegenden Fahrzeugseite angeordnet.

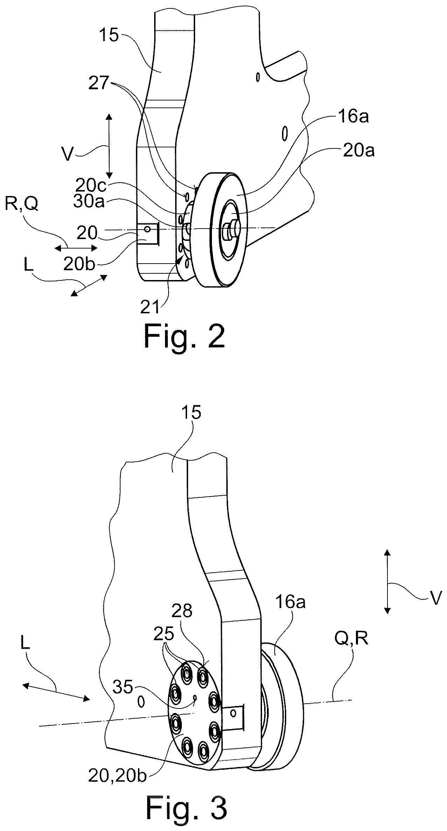

Die Laufrollen 16a, 16b, 17a, 17b sind jeweils - wie in den Figuren 2 bis 7 ersichtlich ist - auf einem an dem Schubschlitten 15 angeordneten Achsschenkel 20 drehbar gelagert.

Erfindungsgemäß sind die Achsschenkel 20 der beiden vorderen Laufrollen 16a, 16b und/oder die Achsschenkel 20 der beiden hinteren Laufrollen 17a, 17b mit jeweils einer Sensorik 21 zur Kraftmessung der auf die Laufrollen 16a, 16b und/oder auf die Laufrollen 17a, 17b wirkenden Kräfte versehen. In dem dargestellten Ausführungsbeispiel sind die Achsschenkel 20 der beiden vorderen Laufrollen 16a, 16b mit jeweils einer Sensorik 21 zur Kraftmessung der auf die beiden vorderen Laufrollen 16a, 16b wirkenden Kräfte versehen. In den Figuren 2 bis 4 ist hierbei der Schubschlitten 15 im Bereich der vorderen Laufrolle 16a dargestellt. Die gegenüberliegende vordere Laufrolle 16b weist einen identischen Aufbau auf.

Es versteht sich, dass alternativ oder zusätzlich die Achsschenkel 20 der beiden hinteren Laufrollen 17a, 17b mit jeweils einer Sensorik 21 zur Kraftmessung der auf die beiden hinteren Laufrollen 17a, 17b wirkenden Kräfte versehen sein können.

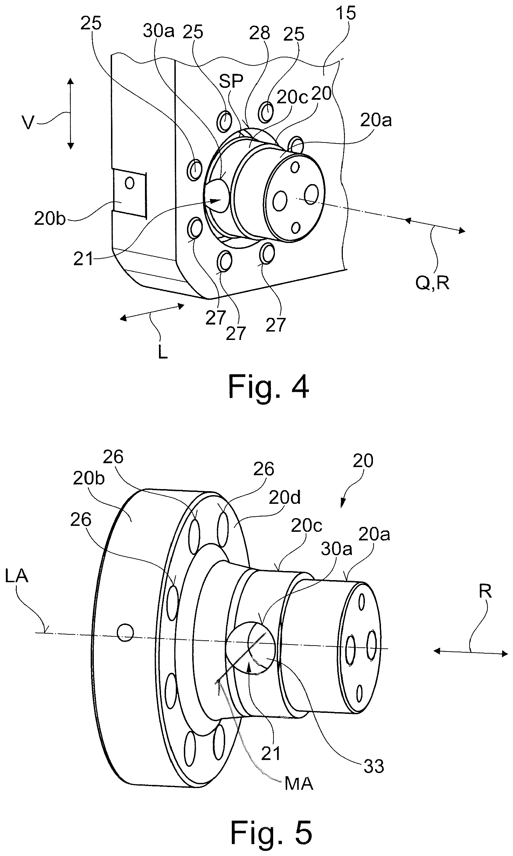

Die Achsschenkel 20 weisen - wie aus den Figuren 5 bis 7 in Verbindung mit den Figuren 2 bis 4 ersichtlich ist - an einem ersten axialen Endbereich jeweils einen Lagerungszapfen 20a auf, auf dem die Laufrolle 16a bzw. 16b drehbar gelagert ist, und an einem gegenüberliegenden zweiten Endbereich einen Befestigungsflansch 20b auf, mit dem der Achsschenkel 20 an dem Schubschlitten 15 befestigt ist.

Im dargestellten Ausführungsbeispiel ist der Achsschenkel 20 mittels des Befestigungsflansches 20b an dem Schubschlitten 15 lösbar befestigt. Hierzu sind im dargestellten Ausführungsbeispiel mehrere Schraubverbindungen 25 vorgesehen. Die Schraubverbindungen 25 umfassen jeweils eine Befestigungsschraube, die in einer Aufnahmebohrung 26 in dem Befestigungsflansch 20b des Achsschenkels 20 angeordnet ist und in eine Gewindebohrung 27 im Schubschlitten 15 eingeschraubt werden kann.

Die Sensorik 21 ist in axialer Längsrichtung R des Achsschenkels 20 zwischen dem Lagerungszapfen 20a und dem Befestigungsflansch 20b in einem mittleren Messabschnitt 20c des Achsschenkels 20 angeordnet.

Der Achsschenkel 20 ist mit der axialen Längsrichtung R in Fahrzeugquerrichtung Q verlaufend an dem Schubschlitten 15 befestigt.

Wie aus den Figuren 2 bis 4 ersichtlich ist, ist der Achsschenkel 20 mit dem Befestigungsflansch 20b in dem Schubschlitten 15 versenkt angeordnet. Der Schubschlitten 15 ist zur Aufnahme des Achsschenkels 20 mit einer als Stufenbohrung ausgebildeten Aufnahmebohrung 28 versehen, an deren Durchmesserübergang der Achsschenkel 20 mit der Stirnseite 20d des Befestigungsflansches 20b axial abgestützt ist. Im Abschnitt der Aufnahmebohrung 28 mit dem größeren Durchmesser ist der Befestigungsflansch 20b des Achsschenkels 20 angeordnet und in dem Abschnitt der Aufnahmebohrung 28 mit dem kleineren Durchmesser ist der Messabschnitt 20c des Achsschenkels 20 angeordnet.

In dem dargestellten Ausführungsbeispiel ist der Achsschenkel 20 mit dem Messabschnitt 20c teilweise innerhalb des Schubschlittens 15 angeordnet. Um eine entsprechende Verformung des Messabschnitts 20c des Achsschenkels 20 unter Belastung zu ermöglichen, ist - wie aus der Figur 4 ersichtlich ist - zwischen dem Achsschenkel 20 im Bereich des Messabschnitts 20c und der den Achsschenkel 20 aufnehmenden Aufnahmebohrung 28 des Schubschlittens 15 ein umlaufender Luftspalt SP ausgebildet. Der Durchmesser der Aufnahmebohrung 28 ist hierzu größer ausgeführt als der Durchmesser des Achsschenkels 20 im Bereich des Messabschnitts 20c.

Zur Aufnahme der Sensorik 21 ist der Achsschenkel 20 an dem Messabschnitt 20c mit mindestens einer als Querausnehmung ausgebildeten Ausnehmung 30, 30a, 30b versehen. Die Ausnehmung 30, 30a, 30b kann jeweils durch eine Fräsbearbeitung in dem Achsschenkel 20 hergestellt werden.

Der Achsschenkel 20 ist an dem Schubschlitten 15 derart befestigt, dass die Ausnehmung 30 bzw. 30a, 30b jeweils horizontal angeordnet ist und sich in Fahrzeuglängsrichtung L erstreckt.

Die Ausnehmung 30, 30a, 30b ist mittig zur Längsachse LA des Achsschenkels 20 angeordnet, d.h. die Ausnehmung 30, 30a, 30b schneidet mit ihrer Mittelachse MA die Längsachse LA des Achsschenkels 20.

Mit der Sensorik 21 erfolgt jeweils eine Dehnungsmessung des Achsschenkels 20. Die Kraftmessung zur Ermittlung der Kräfte auf Laufrollen 16a, 16b basiert somit auf dem Prinzip der Dehnungsmessung.

In den Figuren 2 bis 6 ist der Achsschenkel 20 zur Aufnahme der Sensorik 21 mit zwei fluchtend zueinander angeordneten Ausnehmungen 30a, 30b versehen, zwischen denen am Achsschenkel 20 ein Wandabschnitt 33 in Form eines Mittelstegs ausgebildet ist. An einer ersten Stirnseite 33a des Wandabschnitts 33 ist eine Sensoreinrichtung 21a und an einer zweiten Stirnseite 33b des Wandabschnitts 33 ist eine weitere Sensoreinrichtung 21b als Sensorik 21 angeordnet. Die beiden Ausnehmungen 30a, 30b sind somit koaxial angeordnet und weisen eine gemeinsame Mittelachse MA auf. Der von dem Mittelsteg gebildete Wandabschnitt 33 trennt somit die beiden Ausnehmungen 30a, 30b voneinander und bildet eine Art Membran, die von den beiden Ausnehmungen 30a, 30b erzeugt wird, für die von den beiden Sensoreinrichtungen 21a, 21b gebildete Sensorik 21.

In den Figuren 2 bis 6 sind die beiden Ausnehmungen 30a, 30b für die Sensorik 21 jeweils als kreisförmige Bohrung ausgebildet.

Die Sensorik 21 und somit die beiden Sensoreinrichtungen 21a, 21b ist bevorzugt jeweils von Dehnmessstreifen (DMS) gebildet, mit denen die unter Belastung auftretenden Dehnungen und somit Verformungen des Messabschnitts 20c des Achsschenkels 20 erfasst werden. Dabei kann die Messung der Dehnung des Messabschnitts 20c des Achsschenkels 20 unter Schubbelastung durch Dehnungsmessstreifen oder alternativ die Messung der Dehnung des Messabschnitts 20c unter Schubbelastung durch Dünnfilmzellen oder alternativ die Messung der Dehnung des Messabschnitts 20c über einen Einpresssensor in der Ausnehmungen 30, 30a, 30b erfolgen.

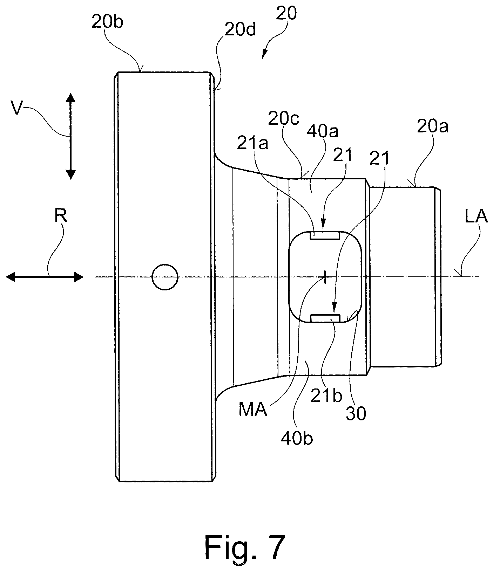

In der Figur 7 ist die ist die Ausnehmung 30 für die Sensorik 21 als rechteckförmige Ausnehmung mit abgerundeten Eckbereichen ausgeführt. Die Ausnehmung 30 durchsetzt den Achsschenkel 20.

In der Figur 7 erfolgt die Messung der Dehnung des Messabschnitts 20c des Achsschenkels 20 nach dem Prinzip Doppelbiegebalken unter Zug- und Druckbelastung. Im Ausführungsbeispiel der Figur 7 bildet der Messabschnitt 20c im Bereich der rechteckförmigen Ausnehmungen 30 jeweils einen Doppelbiegebalken mit zwei Biegebalken als Messabschnitte 40a, 40b. Der Messabschnitt 40a ist hierbei in vertikaler Richtung V oberhalb der rechteckförmigen Ausnehmung 30 und der Messabschnitts 40b unterhalb der rechteckförmigen Ausnehmung 30 angeordnet. Die Ausnehmung 30 ist somit in vertikaler Richtung V nach oben durch den oberen Messabschnitt 40a und nach unten durch den unteren Messabschnitt 40b begrenzt. Bei einer mit dem Lastaufnahmemittel 5 aufgenommenen Last G werden diese Messabschnitte 40a, 40b auf Biegung beansprucht und verformen sich bei entsprechender Belastung. Diese Verformungen, die als Stauchungen (Druckbelastung) und Dehnungen (Zugbelastung) an den Randfasern der Oberflächen der Messabschnitte 40a, 40b auftreten, werden bevorzugt durch innerhalb der Ausnehmungen 30 angeordnete Sensoreinrichtungen 21a, 21b, insbesondere Dehnmessstreifen (DMS), als Sensorik gemessen. Die Sensoreinrichtung 21a ist hierbei an der oberen Begrenzungswand der Ausnehmung 30 und somit an dem oberen Messabschnitt 40a und die Sensoreinrichtung 21b an der unteren Begrenzungswand der Ausnehmung 30 und somit an dem unteren Messabschnitt 40b angeordnet.

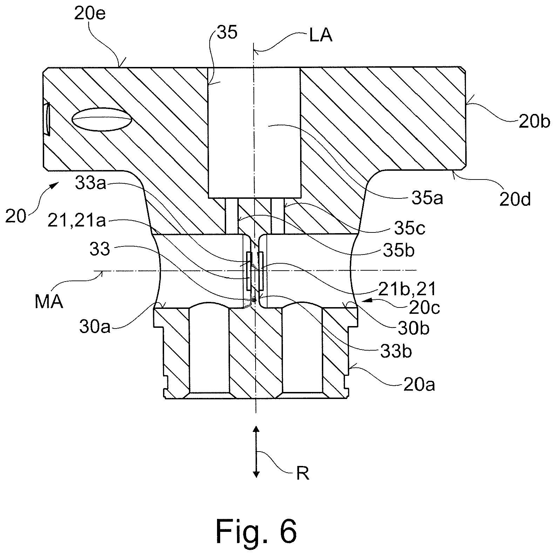

Vorteilhafterweise führt jede Sensoreinrichtung 21a, 21b der Figuren 6 und 7 eine redundante Kraftmessung durch. Die Redundanz kann beispielsweise dadurch erfolgen, dass die beiden Sensoreinrichtungen 21a, 21b, die in der Figur 6 an den beiden Stirnseiten 33a, 33b des Wandabschnitts 33 angeordnet sind bzw. in der Figur 7 an der oberen und an der unteren Wand der Ausnehmung 30 angeordnet sind, jeweils eine DMS-Vollbrücke aufweisen. Jeder Achsschenkel 20 weist somit zwei DMS-Vollbrücken auf. Die Kraftmessung ist somit in jedem Achsschenkel 20 redundant ausgeführt.

Der Achsschenkel 20 ist - wie in der Figur 6 näher veranschaulicht ist - mit einem von der Ausnehmung 30 bzw. 30a, 30b zu dem Befestigungsflansch 20b geführten Aufnahmekanal 35 versehen, in dem ein mit der Sensorik 21 in Verbindung stehendes Verbindungskabel angeordnet ist. Im dargestellten Ausführungsbeispiel erstreckt sich der Aufnahmekanal 35 zu der äußeren Stirnseite 20e des Befestigungsflansches 20b. In der Figur 6 ist in dem Aufnahmekanal 35 eine Sensorelektronikeinrichtung der Sensorik 21 angeordnet, mit der eine Signalaufbereitung der Signale der Sensoreinrichtungen 21a, 21b erfolgt. Der Aufnahmekanal 35 bildet hierzu ausgehend von der Stirnseite 20e des Befestigungsflansches 20b einen entsprechenden Einbauraum 35a, in dem die Sensorelektronikeinrichtung eingebaut werden kann. Von dem Einbauraum 35a führt eine Bohrung 35b des Aufnahmekanals 35 zu der Ausnehmung 30a und eine Bohrung 35c des Aufnahmekanals 35 zu der Ausnehmung 30b. Über die Bohrungen 35b, 35c können Sensorkabel der an den Stirnseiten 33a, 33b des Wandabschnitts 33 angeordneten Sensoreinrichtungen 21a, 21b zu der in dem Einbauraum 35a angeordneten Sensorelektronikeinrichtung geführt werden. Es versteht sich, dass bei der Figur 7 in analoger Weise ein Aufnahmekanal in dem Achsschenkel 20 ausgebildet sein kann, um eine Sensorelektronikeinrichtung der Sensorik 21 in den Achsschenkel 20 einzubauen und mit den Sensoreinrichtungen 21a, 21b zu verbinden.

Die Sensorik 21 steht mit einer elektronischen Steuereinrichtung 50 des Schubmaststaplers 1 in Verbindung. Die Steuereinrichtung 50 steht weiterhin mit einer das Lastgewicht einer auf dem Lastaufnahmemittel 5 befindlichen Last G erfassenden Sensorvorrichtung in Verbindung. Die Steuereinrichtung 50 ist hierbei derart ausgebildet, dass aus dem Lastgewicht der Last G und der mittels der Sensorik 21 in den Achsschenkel 20 erfassten Kräfte auf die vorderen Laufrollen 16a, 16b zusammen mit in der Steuereinrichtung 50 hinterlegten Werten zur Geometrie des Schubschlittens 15 der horizontale Abstand $S_{LSP}$ des Lastschwerpunkts LSP der Last G in Fahrzeuglängsrichtung L und/oder das Lastmoment der Last G und/oder der horizontale Abstand des Lastschwerpunkts LSP der Last G in Fahrzeugquerrichtung Q bestimmt wird.

Die das Lastgewicht der auf dem Lastaufnahmemittel 5 befindlichen Last G erfassende Sensorvorrichtung kann hierbei beispielsweise den hydraulischen Druck in einer Hubhydraulik des Gabelträgers 4 bzw. des Lastaufnahmemittels 5 erfassen. Alternativ kann das Lastgewicht der auf dem Lastaufnahmemittel 5 befindlichen Last G direkt mit einer Kraftmesssensorik gemessen werden, die beispielsweise die Kraft an einer den Gabelträger 4 bzw. des Lastaufnahmemittels 5 betätigenden Hubkette erfasst. Alternativ kann das Lastgewicht der auf dem Lastaufnahmemittel 5 befindlichen Last G direkt mit einer Kraftmesssensorik gemessen werden, die direkt in das Lastaufnahmemittel 5 integriert ist, beispielsweise Gabelzinken 5a, 5b mit einer integrierten Kraftmesssensorik.

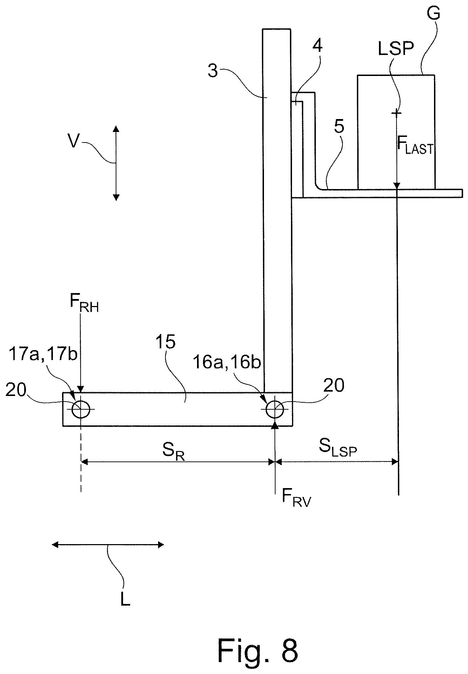

Die Berechnung des horizontalen Abstands $S_{LSP}$ des Lastschwerpunkts LSP der Last G in Fahrzeuglängsrichtung L in der elektronischen Steuereinrichtung 50 wird im folgenden Anhand der Figur 8 erläutert.

In der Figur 8 ist der Schubschlitten 15 mit den vorderen Laufrollen 16a, 16b und den hinteren Laufrollen 17a, 17b dem daran angeordneten Hubgerüst 3, dem an dem Hubgerüst 3 angeordneten Gabelträger 5, dem Lastaufnahmemittel 5 und einer auf dem Lastaufnahmemittel 5 befindlichen Last G dargestellt.

Die auf dem Lastaufnahmemittel 5 befindliche Last G erzeugt eine Gewichtskraft (Lastgewicht) $F_{Last}$, die an den vorderen Laufrollen 16a, 16b des Schubschlittens 15 durch Kräfte $F_{RV}$ und an den hinteren Laufrollen 17a, 17b des Schubschlittens 15 durch Kräfte $F_{RH}$ abgestützt wird. Die Kräfte $F_{RV}$ wirken auf die an den unteren Laufbahnen in den Radarmen 2a, 2b abgestützten vorderen Laufrollen 16a, 16b des Schubschlittens 15. Die Kräfte $F_{RH}$ wirken auf die an den oberen Laufbahnen in den Radarmen 2a, 2b abgestützten hinteren Laufrollen 17a, 17b des Schubschlittens 15.

Das Kräftegleichgewicht ist dabei wie folgt:

$$\Sigma F: F_{Last} + F_{RV} - F_{RH} = O \qquad \text{(Formel 1)}$$

Da die Kraft $F_{Last}$ mit der Sensorvorrichtung gemessen wird und die Kräfte $F_{RV}$ mit der Sensorik 21 in den Achsschenkel 20 der vorderen Laufrollen 16a, 16b gemessen werden, kann die Formel 1 umgestellt werden in:

$$F_{RH} = F_{RV} - F_{Last} \qquad \text{(Formel 2)}$$

Das Momentengleichgewicht um die vorderen Laufrollen 16a, 16b ist dabei wie folgt:

$$\Sigma M: F_{RH} * S_R - F_{Last} * S_{LSP} = 0 \quad \text{(Formel 3)}$$

wobei $S_R$ der Abstand der vorderen Laufrollen 16a, 16b von den hinteren Laufrollen 17a, 17b in Fahrzeuglängsrichtung L ist, der als Wert zur Geometrie des Schubschlittens 15 in der elektronischen Steuereinrichtung 50 hinterlegt ist und $S_{LSP}$ der zu berechnende horizontale Abstand $S_{LSP}$ des Lastschwerpunkts LSP der auf dem Lastaufnahmemittel 5 befindlichen Last G von der Drehachse der vorderen Laufrollen 16a, 16b in Fahrzeuglängsrichtung L ist.

Die Formel 3 kann somit auf die zu berechnende Größe $S_{LSP}$ umgestellt werden in

$$S_{LSP} = F_{RH} * S_R/F_{Last} \qquad \text{(Formel 4)}$$

Mit der Formel 2 können in der Formel 4 die Kräfte $F_{RH}$ ersetzt werden, so dass sich die zu berechnende Größe $S_{LSP}$ mit der Formel

$$S_{LSP} = (F_{RV} - F_{Last}) * S_R/F_{Last} \qquad \text{(Formel 5)}$$

Anhand der Formel 5 kann somit in der elektronischen Steuereinrichtung 50 mit der mittels der Sensorik 21 in den Achsschenkeln 20 der beiden vorderen Laufrollen 16a, 16b gemessenen Kräfte $F_{RV}$, der mittels der Sensorvorrichtung gemessenen Gewichtskraft (Lastgewicht) $F_{Last}$ der aufgenommenen Last G und des als Wert zur Geometrie des Schubschlittens 15 in der elektronischen Steuereinrichtung 50 hinterlegten Abstandes $S_R$ der vorderen Laufrollen 16a, 16b von den hinteren Laufrollen 17a, 17b der horizontale Abstand $S_{LSP}$ des Lastschwerpunktes LSP der aufgenommenen Last G berechnet werden.

Mit dem horizontalen Abstand $S_{LSP}$ des Lastschwerpunktes LSP der aufgenommenen Last G kann in der elektronischen Steuereinrichtung 50 weiterhin in Verbindung mit der mittels der Sensorvorrichtung gemessenen Gewichtskraft (Lastgewicht) $F_{Last}$ der aufgenommenen Last G anhand der Gleichung $F_{Last}*S_{LSP}$ das Lastmoment der aufgenommenen Last G in Fahrzeuglängsrichtung L um die vorderen Laufrollen 16a, 16b berechnet werden.

Da von der Steuereinrichtung 50 an beiden vorderen Laufrollen 16a, 16b mit den Sensoriken 21 in den beiden Achsschenkeln 20 die jeweiligen Kräfte $F_{RV}$ und somit die Kräfte auf die linke vordere Laufrolle 16a und auf die rechte vordere Laufrolle 16b gemessen werden, kann von der elektronischen Steuereinrichtung 50 weiterhin auf die seitliche Lage bzw. Position des Lastschwerpunktes LSP in Fahrzeugquerrichtung Q geschlossen werden. Aus der seitlichen Lage des Lastschwerpunktes LSP kann weiterhin das Lastmoment der aufgenommen Last G in Fahrzeugquerrichtung Q berechnet werden und/oder die Lage Gesamtschwerpunktes des Schubmaststaplers 1 in Fahrzeugquerrichtung Q berechnet werden.

Sofern die Steuereinrichtung 50 weiterhin mit einer die Position des Schubschlittens 15 in Fahrzeuglängsrichtung L erfassenden Sensorvorrichtung in Verbindung steht und somit der Steuereinrichtung 50 die aktuelle Position des Schubschlittens 15 in Fahrzeuglängsrichtung L bekannt ist, kann von der Steuereinrichtung 50 in Verbindung mit dem erfassten Lastgewicht $F_{Last}$ und des berechneten Abstands SLSP weiterhin die aktuelle Lage bzw. Position des Lastschwerpunktes LSP der aufgenommenen Last G in Fahrzeuglängsrichtung L, beispielsweise der Abstand des Lastschwerpunktes LSP der aufgenommenen Last G von der Drehachse der Laufräder 11a, 11b in Fahrzeuglängsrichtung L, und daraus das Lastmoment der aufgenommenen Last G in Fahrzeuglängsrichtung L um die Laufräder 11a, 11b und/oder die Lage des Gesamtschwerpunktes des Schubmaststaplers 1 in Fahrzeuglängsrichtung L berechnet werden.

**Patentansprüche**

1. Schubmaststapler (1) mit einem ein Lastaufnahmemittel (5) aufweisenden Hubgerüst (3), wobei das Hubgerüst (3) an einem Schubschlitten (15) angeordnet ist und der Schubschlitten (15) in Fahrzeuglängsrichtung (L) verschiebbar an einem Fahrzeugkörper (2) des Schubmaststaplers (1) angeordnet ist, wobei an dem Schubschlitten (15) zwei in Fahrzeugquerrichtung (Q) beabstandete vordere Laufrollen (16a, 16b) und zwei in Fahrzeugquerrichtung (Q) beabstandete hintere Laufrollen (17a, 17b) angeordnet sind, mit denen der Schubschlitten (15) am Fahrzeugkörper (2) geführt ist, wobei die Laufrollen (16a, 16b; 17a, 17b) jeweils auf einem an dem Schubschlitten (15) angeordneten Achsschenkel (20) drehbar gelagert sind, **dadurch gekennzeichnet, dass** die Achsschenkel (20) der vorderen Laufrollen (16a, 16b) und/oder die Achsschenkel (20) der hinteren Laufrollen (17a, 17b) mit jeweils einer Sensorik (21) zur Kraftmessung der auf die Laufrollen (16a, 16b; 17a, 17b) wirkenden Kräfte ($F_{RV}$; $F_{RH}$) versehen sind.

2. Schubmaststapler nach Anspruch 1, **dadurch gekennzeichnet, dass** der Achsschenkel (20) jeweils einen Lagerungszapfen (20a), an dem die Laufrolle (16a, 16b; 17a, 17b) drehbar gelagert ist, und einen Befestigungsflansch (20b) aufweist, mit dem der Achsschenkel (20) an dem Schubschlitten (15) befestigt ist, wobei die Sensorik (21) in Längsrichtung (R) des Achsschenkels (20) zwischen dem Lagerungszapfen (20a) und dem Befestigungsflansch (20b) in einem Messabschnitt (20c) des Achsschenkels (20) angeordnet ist.

3. Schubmaststapler nach Anspruch 1 oder 2, **dadurch gekennzeichnet, dass** der Achsschenkel (20) zur Aufnahme der Sensorik (21) jeweils mit mindestens einer Ausnehmung (30; 30a, 30b) versehen ist.

4. Schubmaststapler nach Anspruch 3, **dadurch gekennzeichnet, dass** die Ausnehmung (30; 30a, 30b) horizontal angeordnet ist und sich in Fahrzeuglängsrichtung (L) erstreckt.

5. Schubmaststapler nach einem der Ansprüche 1 bis 4, **dadurch gekennzeichnet, dass** mit der Sensorik (21) jeweils eine Dehnungsmessung des Achsschenkels (20) erfolgt.

6. Schubmaststapler nach einem der Ansprüche 1 bis 5, **dadurch gekennzeichnet, dass** die Sensorik (21) eine redundante Kraftmessung durchführt.

7. Schubmaststapler nach einem der Ansprüche 2 bis 6, **dadurch gekennzeichnet, dass** der Achsschenkel (20) mittels des Befestigungsflansches (20b) an dem Schubschlitten (15) lösbar befestigt ist, insbesondere mittels Schraubverbindungen (25).

8. Schubmaststapler nach einem der Ansprüche 2 bis 7, **dadurch gekennzeichnet, dass** zwischen dem Achsschenkel (20) und einer den Achsschenkel (20) aufnehmenden Aufnahmebohrung (28) des Schubschlittens (15) im Bereich des Messabschnitts (20c) des Achsschenkels (20) ein Luftspalt (SP) ausgebildet ist.

9. Schubmaststapler nach einem der Ansprüche 2 bis 8, **dadurch gekennzeichnet, dass** der Achsschenkel (20) mit einem von der Ausnehmung (30; 30a, 30b) zu dem Befestigungsflansch (20b), insbesondere zu einer Stirnseite (20e) des Befestigungsflansches (20b), geführten Aufnahmekanal (35) versehen ist, in dem ein mit der Sensorik (21) in Verbindung stehendes Verbindungskabel angeordnet ist.

10. Schubmaststapler nach Anspruch 9, **dadurch gekennzeichnet, dass** in dem Aufnahmekanal (35) eine Sensorelektronikeinrichtung der Sensorik (21) angeordnet ist.

11. Schubmaststapler nach einem der Ansprüche 3 bis 10, **dadurch gekennzeichnet, dass** der Achsschenkel (20) zur Aufnahme der Sensorik (21) mit einer den Achsschenkel (20) durchsetzenden Ausnehmung (30) versehen ist, wobei an einer oberen Begrenzungswand der Ausnehmung (30) eine Sensoreinrichtung (21a) und/der an einer unteren Begrenzungswand der Ausnehmung (30) eine Sensoreinrichtung (21b) als Sensorik (21) angeordnet ist.

12. Schubmaststapler nach einem der Ansprüche 3 bis 10, **dadurch gekennzeichnet, dass** der Achsschenkel (20) (20) zur Aufnahme der Sensorik (21) mit zwei fluchtend zueinander angeordneten Ausnehmungen (30a; 30b) versehen ist, zwischen denen ein Wandabschnitt (33) ausgebildet ist, wobei an einer ersten Stirnseite (33a) des Wandabschnitts (33) eine Sensoreinrichtung (21a) und an einer zweiten Stirnseite (33b) des Wandabschnitts (33) eine Sensoreinrichtung (21b) als Sensorik (21) angeordnet ist.

13. Schubmaststapler nach einem der Ansprüche 1 bis 12, **dadurch gekennzeichnet, dass** die Sensorik (21) mit einer elektronischen Steuereinrichtung (50) in Verbindung steht, die mit einer das Lastgewicht ($F_{Last}$) einer auf dem Lastaufnahmemittel (5) befindlichen Last (G) erfassenden Sensorvorrichtung in Verbindung steht, wobei die Steuereinrichtung (50) derart ausgebildet ist, dass aus dem Lastgewicht ($F_{Last}$) der Last (G) und der mittels der Sensorik (21) erfassten Kräfte ($F_{RV}$) zusammen mit in der Steuereinrichtung (50) hinterlegten Werten zur Geometrie des Schubschlittens (15) der horizontale Abstand ($S_{LSP}$) des Lastschwerpunkts (LSP) der Last (G) in Fahrzeuglängsrichtung (L) und/oder das Lastmoment der Last (G) und/oder die seitliche Lage des Lastschwerpunkts (LSP) der Last (G) in Fahrzeugquerrichtung (Q) bestimmt wird.

14. Schubmaststapler nach Anspruch 13, **dadurch gekennzeichnet, dass** die Steuereinrichtung (50) mit einer die Position des Schubschlittens (15) in Fahrzeuglängsrichtung (L) erfassenden Sensorvorrichtung in Verbindung steht.


**Claims**

1. Reach truck (1) with a lifting frame (3) which has a load suspension means (5), wherein the lifting frame (3) is arranged on a displacement carriage (15), and the displacement carriage (15) is arranged on a vehicle body (2) of the reach truck (1) such that it can be displaced in the vehicle longitudinal direction (L), wherein two front running rollers (16a, 16b) which are spaced apart in the vehicle transverse direction (Q) and two rear running rollers (17a, 17b) which are spaced apart in the vehicle transverse direction (Q) are arranged on the displacement carriage (15), by way of which running rollers the displacement carriage (15) is guided on the vehicle body (2), wherein the running rollers (16a, 16b; 17a, 17b) are mounted rotatably in each case on an axle stub (20) which is arranged on the displacement carriage (15), **characterized in that** the axle stubs (20) of the front running rollers (16a, 16b) and/or the axle stubs (20) of the rear running rollers (17a, 17b) are provided with in each case one sensor system (21) for force measurement of the forces ($F_{RV}$; $F_{RH}$) which act on the running rollers (16a, 16b; 17a, 17b).

2. Reach truck according to Claim 1, **characterized in that** the axle stub (20) in each case has a bearing journal (20a), on which the running roller (16a, 16b; 17a, 17b) is mounted rotatably, and a fastening flange (20b), by way of which the axle stub (20) is fastened to the displacement carriage (15), wherein the sensor system (21) is arranged in the longitudinal direction (R) of the axle stub (20) between the bearing journal (20a) and the fastening flange (20b) in a measuring section (20c) of the axle stub (20).

3. Reach truck according to Claim 1 or 2, **characterized in that** the axle stub (20) is provided in each case with at least one recess (30; 30a, 30b) for receiving the sensor system (21).

4. Reach truck according to Claim 3, **characterized in that** the recess (30; 30a, 30b) is arranged horizontally and extends in the vehicle longitudinal direction (L).

5. Reach truck according to one of Claims 1 to 4, **characterized in that** a strain measurement of the axle stub (20) takes place in each case by way of the sensor system (21).

6. Reach truck according to one of Claims 1 to 5, **characterized in that** the sensor system (21) carries out a redundant force measurement.

7. Reach truck according to one of Claims 2 to 6, **characterized in that** the axle stub (20) is fastened to the displacement carriage (15) releasably by means of the fastening flange (20b), in particular by means of screw connections (25).

8. Reach truck according to one of Claims 2 to 7, **characterized in that** an air gap (SP) is configured between the axle stub (20) and a receiving bore (28), receiving the axle stub (20), of the displacement carriage (15) in the region of the measuring section (20c) of the axle stub (20).

9. Reach truck according to one of Claims 2 to 8, **characterized in that** the axle stub (20) is provided with a receiving channel (35) which is routed from the recess (30; 30a, 30b) to the fastening flange (20b), in particular to an end side (20e) of the fastening flange (20b), in which receiving channel (35) a connecting cable which is connected to the sensor system (21) is arranged.

10. Reach truck according to Claim 9, **characterized in that** a sensor electronics device of the sensor system (21) is arranged in the receiving channel (35).

11. Reach truck according to one of Claims 3 to 10, **characterized in that** the axle stub (20) is provided with a recess (30) which penetrates the axle stub (20) for receiving the sensor system (21), wherein a sensor device (21a) is arranged on an upper bounding wall of the recess (30) and/or a sensor device (21b) is arranged on a lower bounding wall of the recess (30) as sensor system (21).

12. Reach truck according to one of Claims 3 to 10, **characterized in that** the axle stub (20) (20) is provided with two recesses (30a; 30b) which are arranged flush with respect to one another for receiving the sensor system (21), between which recesses (30a; 30b) a wall section (33) is configured, wherein a sensor device (21a) is arranged on a first end side (33a) of the wall section (33) and a sensor device (21b) is arranged on a second end side (33b) of the wall section (33) as sensor system (21) .

13. Reach truck according to one of Claims 1 to 12, **characterized in that** the sensor system (21) is connected to an electronic control device (50) which is connected to a sensor apparatus which detects the load weight ($F_{Last}$) of a load (G) which is situated on the load suspension means (5), wherein the control device (50) is configured in such a way that the horizontal spacing ($S_{LSP}$) of the load centre (LSP) of the load (G) in the vehicle longitudinal direction (L) and/or the load torque of the load (G) and/or the lateral position of the load centre (LSP) of the load (G) in the vehicle transverse direction (Q) are/is determined from the load weight ($F_{Last}$) of the load (G) and the forces ($F_{RV}$) detected by means of the sensor system (21) together with values stored in the control device (50) with respect to the geometry of the displacement carriage (15).

14. Reach truck according to Claim 13, **characterized in that** the control device (50) is connected to a sensor apparatus which detects the position of the displacement carriage (15) in the vehicle longitudinal direction (L).

**Revendications**

1. Chariot élévateur à fourche rétractable (1) comportant un châssis de levage (3) comprenant un moyen de réception de charge (5), le châssis de levage (3) étant disposé sur un chariot de poussée (15) et le chariot de poussée (15) étant disposé de manière déplaçable dans la direction longitudinale du véhicule (L) sur un corps de véhicule (2) du chariot élévateur à fourche rétractable (1), deux roulettes avant (16a, 16b) espacées dans la direction transversale du véhicule (Q) et deux roulettes arrière (17a, 17b) espacées dans la direction transversale du véhicule (Q) étant disposées sur le chariot de poussée (15), roulettes à l'aide desquelles le chariot de poussée (15) est guidé sur le corps de véhicule (2), les roulettes (16a, 16b ; 17a, 17b) étant montées à rotation respectivement sur une fusée d'essieu (20) disposée sur le chariot de poussée (15), **caractérisé en ce que** les fusées d'essieu (20) des roulettes avant (16a, 16b) et/ou les fusées d'essieu (20) des roulettes arrière (17a, 17b) sont dotées respectivement d'un système de capteurs (21) servant à la mesure des forces ($F_{RV}$ ; $F_{RH}$) agissant sur les roulettes (16a, 16b ; 17a, 17b) .

2. Chariot élévateur à fourche rétractable selon la revendication 1, **caractérisé en ce que** la fusée d'essieu (20) comprend respectivement un tourillon de palier (20a) sur lequel la roulette (16a, 16b ; 17a, 17b) est montée à rotation, et une bride de fixation (20b) à l'aide de laquelle la fusée d'essieu (20) est fixée au chariot de poussée (15), le système de capteurs (21) étant disposé dans la direction longitudinale (R) de la fusée d'essieu (20) entre le tourillon de palier (20a) et la bride de fixation (20b) dans une section de mesure (20c) de la fusée d'essieu (20).

3. Chariot élévateur à fourche rétractable selon la revendication 1 ou 2, **caractérisé en ce que** la fusée d'essieu (20) est dotée respectivement d'au moins un évidement (30 ; 30a, 30b) pour la réception du système de capteurs (21).

4. Chariot élévateur à fourche rétractable selon la revendication 3, **caractérisé en ce que** l'évidement (30 ; 30a, 30b) est disposé horizontalement et s'étend dans la direction longitudinale du véhicule (L).

5. Chariot élévateur à fourche rétractable selon l'une des revendications 1 à 4, **caractérisé en ce qu'**une mesure de dilatation de la fusée d'essieu (20) a lieu respectivement à l'aide du système de capteurs (21).

6. Chariot élévateur à fourche rétractable selon l'une des revendications 1 à 5, **caractérisé en ce que** le système de capteurs (21) effectue une mesure redondante de force.

7. Chariot élévateur à fourche rétractable selon l'une des revendications 2 à 6, **caractérisé en ce que** la fusée d'essieu (20) est fixée de manière amovible au chariot de poussée (15) au moyen de la bride de fixation (20b), en particulier au moyen de liaisons vissées (25).

8. Chariot élévateur à fourche rétractable selon l'une des revendications 2 à 7, **caractérisé en ce qu'**un espace d'air (SP) est réalisé entre la fusée d'essieu (20) et un alésage de réception (28), recevant la fusée d'essieu (20), du chariot de poussée (15) dans la région de la section de mesure (20c) de la fusée d'essieu (20).

9. Chariot élévateur à fourche rétractable selon l'une des revendications 2 à 8, **caractérisé en ce que** la fusée d'essieu (20) est dotée d'un canal de réception (35) guidé à partir de l'évidement (30 ; 30a, 30b) jusqu'à la bride de fixation (20b), en particulier jusqu'à un côté frontal (20e) de la bride de fixation (20b), canal de réception dans lequel est disposé un câble de liaison en liaison avec le système de capteurs (21).

10. Chariot élévateur à fourche rétractable selon la revendication 9, **caractérisé en ce qu'**un dispositif électronique de détection du système de capteurs (21) est disposé dans le canal de réception (35).

11. Chariot élévateur à fourche rétractable selon l'une des revendications 3 à 10, **caractérisé en ce que** la fusée d'essieu (20) est dotée d'un évidement (30) traversant la fusée d'essieu (20) pour la réception du système de capteurs (21), un dispositif de détection (21a) étant disposé au niveau d'une paroi de limitation supérieure de l'évidement (30) et/ou un dispositif de détection (21b) étant disposé au niveau d'une paroi de limitation inférieure de l'évidement (30) en tant que système de capteurs (21).

12. Chariot élévateur à fourche rétractable selon l'une des revendications 3 à 10, **caractérisé en ce que** la fusée d'essieu (20) (20) est dotée de deux évidements (30a ; 30b) disposés de manière alignée l'un par rapport à l'autre pour la réception du système de capteurs (21), évidements entre lesquels une section de paroi (33) est réalisée, un dispositif de détection (21a) étant disposé sur un premier côté frontal (33a) de la section de paroi (33) et un dispositif de détection (21b) étant disposé sur un deuxième côté frontal (33b) de la section de paroi (33) en tant que système de capteurs (21).

13. Chariot élévateur à fourche rétractable selon l'une des revendications 1 à 12, **caractérisé en ce que** le système de capteurs (21) est en liaison avec un dispositif de commande électronique (50) qui est en liaison avec un dispositif de détection détectant le poids ($F_{Last}$) d'une charge (G) se trouvant sur le moyen de réception de charge (5), le dispositif de commande (50) étant réalisé de telle sorte qu'à partir du poids ($F_{Last}$) de la charge (G) et des forces ($F_{RV}$) détectées au moyen du système de capteurs (21), conjointement avec des valeurs enregistrées dans le dispositif de commande (50) et concernant la géométrie du chariot de poussée (15), la distance horizontale ($S_{LSP}$) du centre de gravité (LSP) de la charge (G) dans la direction longitudinale du véhicule (L) et/ou le moment de la charge (G) et/ou la position latérale du centre de gravité (LSP) de la charge (G) dans la direction transversale du véhicule (Q) est/sont déterminée(s).

14. Chariot élévateur à fourche rétractable selon la revendication 13, **caractérisé en ce que** le dispositif de commande (50) est en liaison avec un dispositif de détection détectant la position du chariot de poussée (15) dans la direction longitudinale du véhicule (L).

Fig. 1

Fig. 2

Fig. 3

Fig. 4

Fig. 5

Fig. 6

## Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19828938 A1